# EUROPÄISCHE PATENTANMELDUNG

(11) **EP 4 094 867 A1**
(43) Veröffentlichungstag der Anmeldung: **30.11.2022**
(21) Anmeldenummer: 21176030.1
(22) Anmeldetag: 26.05.2021
(51) Int. Cl.: B22F 10/20, B22F 10/30, B22F 10/85, B33Y 10/00, B33Y 30/00, B33Y 50/02, B29C 64/153

(54) **VERFAHREN ZUR ADDITIVEN HERSTELLUNG EINES BAUTEILS**

(71) Anmelder: Siemens Aktiengesellschaft, 80333 München (DE)
(72) Erfinder: Reisch, Raven Thomas, 81379 München (DE); Hauser, Tobias, 89347 Bubesheim (DE); Kamps, Tobias, 80538 München (DE)

(57) **Zusammenfassung**

Die Erfindung betrifft ein Verfahren zu additiven Fertigung eines Bauteils (2) umfassend folgende Schritte:
- Erstellen eines Maschinencodes
- Übertragen des Maschinencodes an eine Steuerung (4)
- Starten des Fertigungsprozesses
- Überwachung des Prozesses mit Sensoren (6),
- Auswertung von Sensordaten zur Ermitteln einer Anomalie (8) im herzustellenden Bauteil sowie
- paralleler Aufbau eines digitalen Zwillings (10) des entstehenden Bauteils (2) während des Prozesses aus den Sensordaten umfassend Positionsdaten der Anomalie (8)
- Prädiktion über die Position (12) eines Druckkopfs (14) zu einer bestimmten Zeit mittels des Maschinencodes
- Analyse eines Arbeitsbereiches rund um diese Position in Hinblick auf vorhandene Anomalien mittels des digitalen Zwillings
- Anpassung der Prozessparameter bei Erreichen des Arbeitsbereiches zur Behebung der Anomalie.

## Beschreibung

Wire Arc Additive Manufacturing (WAAM) ist ein Beispiel, das die Herstellung großvolumiger, metallischer Bauteile ermöglicht. Ein weiters typisches Verfahren hierfür ist das Laserschmelzverfahren (LMD). Dabei stellt die fehlende Wiederholbarkeit des Prozesses eine Herausforderung an die Qualitätssicherung dar. Um sicherzustellen, dass das Bauteil eine ausreichend hohe Qualität aufweist, muss der Prozess überwacht werden. In-Situ-Monitoringsysteme ermöglichen dabei die Analyse am Ort des Geschehens während des Prozesses.

Werden dann Defekte im Prozess erkannt, wird das gewonnene Wissen über die Defekte bisher nicht verwendet, um Prozessanpassungen umzusetzen. Das liegt daran, dass unbekannt ist, welcher Defekt vorliegt und wie diesem zu begegnen ist. Falls eine Anomalie detektiert wird, muss der Prozess deshalb aktuell abgebrochen werden und das Bauteil ist Ausschuss.

Die Aufgabe der Erfindung besteht darin, ein Verfahren zur additiven Fertigung eines Bauteils bereitzustellen, das gegenüber dem Stand der Technik eine verbesserte Prozesskontrolle aufweist und die Ausschussrate während der Produktion senkt.

Die Lösung der Aufgabe besteht in einem Verfahren zur additiven Fertigung eines Bauteils nach Patentanspruch 1. Das erfindungsgemäße Verfahren umfasst dabei folgende Schritte:
- Erstellen eines Maschinen Codes
- Übertragen des Maschinen Codes an eine Steuerung
- Starten des Fertigungsprozesses
- Überwachung des Prozesses mit Sensoren,
- Auswertung der Sensordaten zur Ermitteln einer Anomalie im herzustellenden Bauteil sowie
- Aufbau eines digitalen Zwillings des entstehenden Bauteils aus den Sensordaten umfassend Positionsdaten der Anomalie
- Prädiktion über die Position 12 eines Druckkopfs 14 zu einer bestimmten Zeit mittels des Maschinencodes
- Analyse eines Arbeitsbereiches rund um diese Position in Hinblick auf vorhandene Anomalien mittels des digitalen Zwillings
- Anpassung der Prozessparameter bei Erreichen des Arbeitsbereiches zur Behebung der Anomalie.
Dabei seien die verwendeten Begriffe wie folgt definiert:

### Druckkopf

Als Druckkopf wird das Bauteil einer additiven Fertigungsvorrichtung bezeichnet, das für den Materialauftrag verantwortlich ist. Beim WAAM ist dies das Element, an dem das Ende des aufzuschweißenden Drahtes geführt wird, beim LMD Verfahren ist dies das Element, an dem der Laserstrahl zum Aufschmelzen des Pulvers austritt. Der Druckkopf steht während des Prozesses über ein definiertes Merkmal, beispielsweise der Spitze einer Elektrode oder einer Drahtautrittsöffnung an einer bestimmten Position. Diese Position des Druckkopfes wiederum korreliert räumlich äquidistant mit einem Arbeitspunkt im oder an der Oberfläche des entstehenden Bauteils. Zwischen der Position des Druckkopfes und dem Arbeitspunkt am Bauteil wird deshalb unterschieden, da diese in verschiedenen additiven Fertigungsverfahren nicht räumlich zusammenfallen, aber stets zwangsgesteuert in Zusammenhang stehen.

### Sensor und Sensordaten

Ein Sensor, auch als Detektor, (Messgrößen- oder Mess-)Aufnehmer oder (Mess-)Fühler bezeichnet, ist ein technisches Bauteil, das bestimmte physikalische oder chemische Eigenschaften (physikalisch z. B. Wärmemenge, Temperatur, Feuchtigkeit, Druck, Schallfeldgrößen, Helligkeit, Beschleunigung oder chemisch z. B. pH-Wert, Ionenstärke, elektrochemisches Potential) und/oder die stoffliche Beschaffenheit seiner Umgebung qualitativ oder als Messgröße quantitativ erfassen kann. Diese Größen werden mittels physikalischer, chemischer oder biologischer Effekte erfasst und in ein weiterverarbeitbares insbesondere elektrisches Signal, dem Sensorsignal umgeformt. Ein elektrisches Signal ist eine Spezialform eines physikalischen Signals. Es handelt sich um eine elektrische Größe wie Stromstärke, Spannung oder Widerstand, wenn es in irgendeiner Form variabel ist und somit Informationen aufnehmen und transportieren kann. Als Wert des Signals kommen beispielsweise Gleichwert, Scheitelwert, Frequenz, Phasenverschiebungswinkel oder Tastgrad infrage. Auch mathematische Auswertungen also eine Weiterverarbeitung von physikalischen Sensordaten werden als Sensordaten als solche bezeichnet.

### Digitaler Zwilling

Ein digitaler Zwilling ist eine digitale Repräsentation eines materiellen oder immateriellen Objekts oder Prozesses aus der realen Welt in der digitalen Welt. Digitale Zwillinge ermöglichen einen übergreifenden Datenaustausch. Sie sind dabei mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber anbieten.

### Steuerung

Steuerung ist eine Recheneinheit, die dazu in der Lage ist, Modelle auszuführen und die Daten zu verarbeiten. Beispiele für Steuerungen sind NC (Numerical Control wie Sinumerik), Edge Devices (Industrial Edge oder Sinumerik Edge (ein Rechner, der zwei Netzwerke verbindet und Daten auswerten kann)), ein IPC (Industrial PC ohne Verbindung zum zweiten Netzwerk) oder PLC (Programmable Logic Controller (in Deutsch SPS) wie z. B. Simatic S7)).

### Positionsdaten

Positionsdaten sind ein Datensatz, der ausgehend von einem vor Prozessbeginn definierten Koordinatensystems bezüglich diesem einen Ort im Prozessumfeld definiert.

### Prozessparameter

Prozessparameter sind Parameter, mit denen ein gewünschtes Prozessverhalten eingestellt werden kann. Hierzu gehören z. B. für das Wire Arc Additiv Manufacturing (Lichtbogendraht-auftragsschweißen) Gasfluss, Strom, Spannung, Schweißvorschub, Drahtvorschub, Abstand von Schweißbrenner vom Bauteil und Neigung des Schweißbrenners. Ferner gelten beispielsweise für das LMD (Laser Metal Deposition) auch die Laserleistung, Pulverzufuhr und Laserfokus als typische Prozessparameter.

Die Vorteile der Erfindung gegenüber dem Stand der Technik bestehen darin, dass berücksichtigt wird, dass der Prozess stark von seiner aktuellen Umgebung abhängt. Wenn beispielsweise in Lage drei eine Oxidation auftritt, dann führt dies in der folgenden Lage ebenfalls zu einem abnormalen Prozessverhalten. Gleiches gilt für benachbarte Schweißraupen. Dennoch wird bei der Prozessanalyse nach dem Stand der Technik anders als in der vorliegenden Erfindung lediglich der aktuelle Datenpunkt verwendet, jedoch keine Informationen früherer Datenpunkte desselben Drucks in die Datenauswertung integriert. Der Kontext, der zum jeweiligen Zeitpunkt vorhanden ist, wird beschriebenen Verfahren nicht vernachlässigt, sondern in die Simulation und Umsetzung von Ausgleichsmaßnahmen eingebracht. So hat eine Oxidation oder eine Formabweichung auch Auswirkungen auf die folgenden Lagen und die hier gesammelten Daten. Auswirkungen von Defekten über mehrere Lagen hinweg werden mit dem beschriebenen Verfahren nun ausreichend beachtet, sodass Defekte über mehrere Lagen miteinander korreliert werden. Somit werden Informationen, die bereits existieren, genutzt, um bessere Ergebnisse in der Datenanalyse im Rahmen des in-situ-Monitorings zu erhalten, und gehen nicht verloren. Zeitlicher und räumlicher Kontext, dem im additiven Fertigungsprozess große Bedeutung zu kommt, wird durch die erfindungsgemäße Lösung bei der Datenbewertung gewinnbringend verwendet und Defektbehebungsmaßnahmen können in situ eingeleitet werden.

In einer bevorzugten Ausgestaltungsform der Erfindung wird zur Auswertung der Sensordaten ein Modell verwendet, durch das in einer dynamischen Zeitspanne Rückmeldedaten an die Steuerung berechnet werden. Zur Integration eines zeitlichen Kontexts werden (in der Regel neurale Netze-) Modelle verwendet, die auf Basis von vergangenen Werten den aktuellen Datenpunkt hinsichtlich eines Anomaliewerts bewerten. Die Zeitspanne, die als zeitlicher Kontext verwendet wird, ändert sich dabei dynamisch abhängig davon, wie hoch beispielsweise die aktuelle Schweißgeschwindigkeit oder wie lang das Schweißbad (erfassbar über Schweißkamera + Computer Vision Algorithmen wie z.B. Canny Edge Detection) ist. Eine typische dynamische Dauer beträgt dabei z. B. 0,5 s, wobei sich das Zeitintervall bevorzugt in einer Zeitspanne zwischen 0,05 s und 3 s besonders bevorzugt zwischen 0,1 s und 1 s bewegt.

In einer bevorzugten Ausgestaltungsform der Erfindung wird jedem Ort, den der Druckkopf anfährt, ein Zeitstempel zugewiesen, damit auf die vorherrschende Prozesssituation zum gegebenen Zeitpunkt rückwirkend Informationen ausgewertet werden können.

Insofern ist es auch zweckmäßig, dass der digitale Zwilling in Form einer Punktewolke ausgestaltet ist und zu jedem Punkt der Wolke eine Bewertung zum Prozesszustand hinterlegt sind. Bewertungskriterien sind z. B. die Art der Anomalie (z. B. Oxidation oder Poren). Eine Anomalie ist somit eine Vorstufe eines Defektes, sie kann auch als potentielle Defekt bezeichnet werden.

Bevorzugt wird zu jedem Punkt ein Anomaliewert ermittelt, für dessen Berechnung wiederum in vorteilhafter Weise Informationen, also Prozessdaten und Sensordaten aus Nachbarpunkten innerhalb eines Arbeitsbereiches mit einbezogen werden.

Als Arbeitsbereich wird dabei bevorzugt das räumliche Ausmaß einer zum Beobachtungszeitpunkt vorherrschenden flüssigen Phase herangezogen. Die Form eines Doppel-Ellipsoiden, der mathematisch in der Auswertung gut zu erfassen ist, hat sich vorteilhaft für die Festlegung des Arbeitsbereiches und dessen virtuelle Übertragung in den digitalen Zwilling erwiesen. Dabei ist es auch zweckmäßig, wenn der Arbeitsbereich kontinuierlich mit der Form und Größe der flüssigen Phase, also eines lokalen Schmelzbades verändert wird. Form und Größe der flüssigen Phase kann beispielsweise mittels einer Schweißkamera erfasst werden oder aus der Bauteiltemperatur und dem aktuellen Energieeintrag abgeleitet werden. Eine Spezialform des Doppelellipsoiden ist der Ellipsoid, der bezüglich seiner halben Längsachse symmetrisch ist. Die Kugel ist eine Spezialform des Ellipsoiden.

Es ist ferner zweckmäßig, dass die Anpassung der Prozessparameter zur Behebung der Anomalie an der Stelle oder in der Umgebung der Anomalie umgesetzt wird, um beispielsweise eine Oxidation mittels lokal erhöhten Wärmeeintrags aufzubrennen und/ oder die Bewegungsgeschwindigkeit des Druckkopfes zu verlangsamen um eine Poröse Struktur aufzuschmelzen und somit zu beseitigen.

Die Entscheidung, ob zu welchem Zeitpunkt und an welchem Ort Prozessparameter angepasst werden, basiert dabei auf einer Prädiktion, wohin sich der Druckkopf innerhalb einer definierten Zeitspanne gemäß des Maschinencodes bewegt haben wird. Die Umgebung der so berechneten Position wird anschließend nach Anomalien durchsucht (z.B. Abfrage des Octrees mittels Doppelellipsoids). Wenn Anomalien im Umkreis dieser Position vorliegen, werden Gegenmaßnahmen (z.B. Erhöhung des Wärmeeintrags, der Bewegungsgeschwindigkeit) eingeleitet.

Als additive Fertigungsverfahren, in dem sich das beschrieben Verfahren vorteilhaft ausgestalten lässt, sind insbesondere das das Lichtbogendraht-Auftragsschweißen (Wire Arc Additive Manufacturing (WAAD)) und das Laser Metall Abscheideverfahren (Laser Metal Deposition (LMD)) geeignet.

Weitere Ausgestaltungsformen der Erfindung und weitere Merkmale werden anhand der folgenden Figuren näher erläutert.

Dabei zeigen:
- Figur 1: eine schematische Darstellung einer Anlage zum Lichtbogendraht-Auftragsschweißen,
- Figur 2: eine Veranschaulichung einer Punktkolke eines digitalen Zwillings eines entstehenden Bauteils,
- Figur 3: ein Arbeitsbereich in Form eines Doppel-Ellipsoids zur Bestimmung von Anomalien.

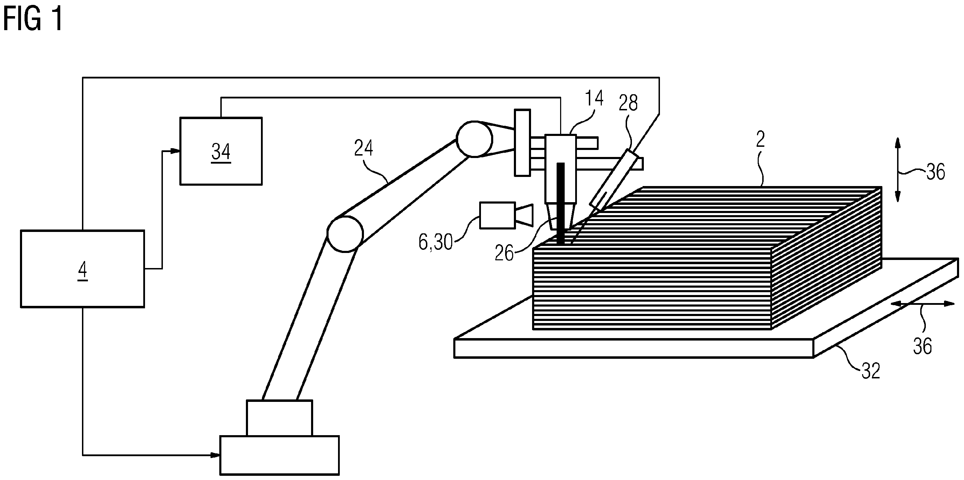

In Figur 1 ist eine schematische Darstellung eines additiven Fertigungsverfahren zur Herstellung eines Bauteils 2 gegeben. Dieses additive Fertigungsverfahren ist exemplarisch als Lichtbogendraht-Auftragsschweißen (im Englischen Wire Arc Additive Manufaturing, WAAM) ausgestaltet. Analog könnte das im Weiteren Beschriebene auch auf ein anderes additives Fertigungsverfahren, wie beispielsweise Laser Metal Depositon angewandt werden. Hierbei wird über einen Roboterarm 24 ein Druckkopf 14 mit einer Elektrode 26 auf eine bestimmte Position eines Bauteils 2 gerichtet. Ferner ist ein Schweißdraht 28 vorgesehen, der durch die Elektrode 26 an einer entsprechenden Position 12 des Druckkopfes 14 aufgeschmolzen wird. Ferner ist eine Steuerung 4 vorgesehen sowie eine Energieversorgung 34, über die sowohl die Elektrode 26 als auch ein Vorschub des Schweißdrahtes und des Roboterarms mit Energie versorgt werden. Der gesamte Prozess wird über die Steuerung 4 gesteuert, auf die im Weiteren noch eingegangen wird. Insbesondere wird der Prozess durch eine Vielzahl von Sensoren überwacht. Rein exemplarisch ist ein Sensor 6 in der grafischen Figur 1 in Form einer Schweißkamera 30 dargestellt.

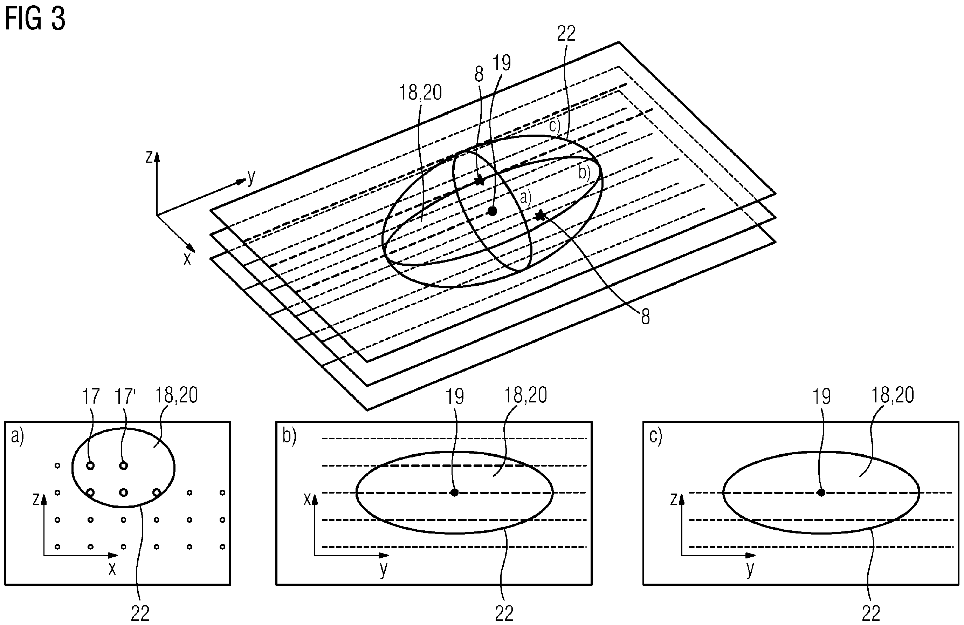

Durch die Schweißkamera 30 können beispielsweise Werte wie die Geometrie einer flüssigen Phase 20, auf die noch in Figur 3 eingegangen wird, ermittelt werden. Weitere Sensordaten sind zum Beispiel die Spannung und der Stromfluss im Prozess, die Temperatur der flüssigen Phase 20, der Vorschub des Druckkopfes 14 sowie die Vorschubgeschwindigkeit des Schweißdrahtes.

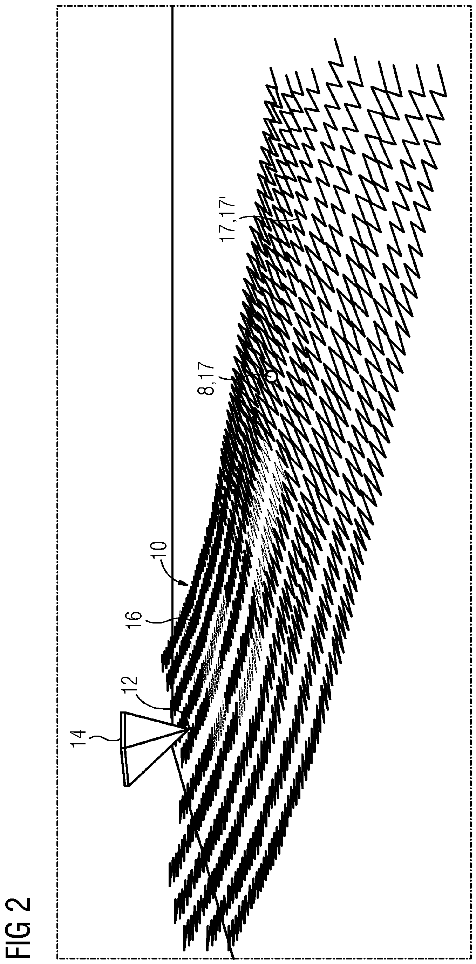

Zu jeder Position 12 des Druckkopfes 14, die eindeutig zuordenbar mit einer Position im Bauteil 2 korreliert, werden sowohl die Positionsdaten in Form eines Punktes in einem Koordinatensystem als auch ein Zeitstempel aufgenommen und an die Steuerung 4 weitergegeben. In der Steuerung 4 oder an einem mit ihr in Verbindung stehenden Rechner wird während des Druckes des Bauteils 2 simultan ein digitaler Zwilling 10 erstellt, der schematisch in Figur 2 veranschaulicht ist. Dabei umfasst der digitale Zwilling 10 eine Punktewolke 16 in der der Druckkopf 14 bzw. seine Position 12 ebenfalls schematisch durch eine Dreiecksspitze dargestellt ist. Hierbei wird für jeden Punkt 17 aus den ermittelten und an die Steuerung übertragenen Sensordaten der Punktewolke 10 ein Anomaliewert berechnet.

Zur Bewertung des Anomaliewertes, auf die noch eingegangen wird, wird zunächst ein Arbeitsbereich 18 am Bauteil 2 definiert, der im digitalen Zwilling durch ein Ellipsoid dargestellt ist, was im Wesentlichen im realen Bauteil 2 eine flüssige Phase 20 umfasst, in der das Material des Schweißdrahtes an einer Oberfläche des Bauteils 2 gerade aufgeschmolzen ist. Bei der Betrachtung flüssigen Phasen hat sich insbesondere ein Doppel-Ellipsoid als zweckmäßig herausgestellt. Der Arbeitsbereich wird insbesondere relevant, wenn eine Korrelation von detektierten Anomalien stattfinden soll, die Anomaliedichte bestimmt werden soll oder Kompensationsstrategien umgesetzt werden sollen

In dieser flüssigen Phase 20 können sich beim Aufbringen des Schweißdrahtes 28 Anomalien 8 ergeben, die Vorstufen von Defekten sein können. Defekte können beispielsweise Oxidation sein, die entstehen, wenn Verunreinigungen auf dem Schweißdrahtes 28 vorhanden sind, bzw. im Prozess eingebracht werden. Auch Lufteinschlüsse in Form von Poren können Anomalien sein und zu Defekten werden. Bei der Bewertung von Anomalien wird dabei nicht nur der jeweilige betrachtete Punkt 17 ausgewertet, sondern es wird dabei auch auf benachbarte Punkte 17' zurückgegriffen, die in dem Arbeitsbereich 18, übertragen auf den digitalen Zwilling 10 in dem Ellipsoid 22 vorliegen. Dies ist in den Schnitt Darstellungen der Figur 3, 3a, 3b, und 3c dargestellt. Für jeden Punkt 17 oder 17' wird ein Anomaliewert berechnet, und es wird dieser dann berücksichtigt, wenn der Druckkopf 14 ein weiteres Mal in die Nähe der so bestimmten Anomalie 8 kommt. Der Druckkopf 14 kann dabei die Anomalie 8 von mehreren Seiten räumlich tangieren, sodass durch Änderung der Prozessparameter in der Nähe der Anomalie 8 diese ausgeglichen werden kann, sodass ein möglicherweise aus der Anomalie entstehender Defekt schon vor dessen Entstehen eliminiert werden kann. Der Vorteil gegenüber herkömmlichen additiven Herstellungsverfahren besteht durch dieses Vorgehen darin, dass bereits der Entstehung von Defekten durch das beschriebene Vorgehen entgegengewirkt wird und somit der Ausschuss vor Bauteilen 2 deutlich reduziert wird.

Das bezüglich der Figuren 1-3 beschriebene Verfahren wird im Weiteren mit anderen Aspekten detaillierter erläutert. Zur Integration des zeitlichen Kontexts werden (Neurale Netze-) Modelle verwendet, die auf Basis von vergangenen Werten (z.B. der letzten 0,5 Sekunden) den aktuellen (Daten)Punkt 17 hinsichtlich eines Anomaliewerts bewerten. Die Zeitspanne, die als zeitlicher Kontext verwendet wird, ändert sich dabei dynamisch abhängig davon, wie hoch die aktuelle Schweißgeschwindigkeit (also die Vorschubgeschwindigkeit des Drucckopfs 14) ist und wie lang das Schweißbad ist. Die Länge des Schweißbades ist beispielsweise über die Schweißkamera 30 in Verbindung mit einer Computer Vision Algorithmen Auswertung wie z.B. Canny Edge Detection erfassbar. Dadurch ist stets sichergestellt, dass alle Prozesswerte, die für das aktuelle flüssigen Schweißbad relevant sind, in die Berechnung des Anomaliewerts einfließen.

Zur Analyse der Daten können entweder Regressionsmodelle (Prädiktion) verwendet werden, wie z.B. Seasonal ARIMA Modelle oder Neuronale Netze auf Basis von Conv1D oder RNN/LSTM Elementen, oder Modelle zur Rekonstruktion der Daten mithilfe von Autoencodern. Zur Vorhersage der Daten können neben den RNN/LSTMs mit einem zeitlichen Speicher auch batchweise verarbeitende CNN-Strukturen genutzt werden.

Zeitliche Strukturen in den Daten, wie beispielsweise Frequenzänderungen oder unregelmäßige Muster, werden so in die Prozessbewertung einbezogen. Für ein Training müssen Prozessdaten mit konstanten Prozessparametern verwendet werden, um eine hohe Genauigkeit zu erreichen.

Bevorzugt wird jedem vom Druckkopf 14 angefahrenen Ort (Position 12 des Druckkopfs 14) ein Zeitstempel gegeben werden, der Informationen darüber gibt, wann dieser angefahren wurde.

Der räumliche Kontext beinhaltet Informationen über lagenübergreifend relevanten Informationen z.B. aus der vorherigen Schicht oder von angrenzenden Schweißtracks. Dazu wird wie beschrieben während des Fertigungsprozesses simultan ein digitales Abbild also der digitale Zwilling 10 des Bauteils 2 erstellt, indem alle relevanten Informationen gespeichert sind. Dieser digitale digitaler Zwilling 10 umfasst eine Punktewolke, bei der für jeden Punkt eine Bewertung des Prozesszustands (z.B. normal/abnormal, Anomaliewert, Art der Anomalie, ...) sowie ein Zeitstempel hinterlegt sind. Die Punktewolke kann dabei räumlich strukturiert abgespeichert werden, damit eine effizientere Abfrage nach räumlichen Strukturen wie z.B. einem Doppelellipsoid oder einer Kugel möglich wird. Eine solche Datenstruktur ist beispielsweise der Octree, der r-tree oder der kd-tree, die über ihre baumartige Struktur eine schnelle Suche nach Punkten im Raum ermöglichen.

Zur Integration des räumlichen Kontexts in die Berechnung des Anomaliewerts eines aktuellen Arbeitspunkts 19 (der räulich äquidistant mit dem Druckkopf in Verbindung steht) wird der Raum um den aktuellen Arbeitspunkt 19 in die Datenanalyse mit einbezogen. Dazu wird zunächst ein dreidimensionaler Arbeitsbereich 18 um den Arbeitspunkt 19 definiert, über den die räumliche Relevanz der Datenpunkte 17, 17' festgestellt wird. Dieser Arbeitsbereich 18 umfasst dabei den Bereich, der vom Schweißbad, also der während des additiven Fertigens flüssigen Phase 20 eingenommen wird. Als Vereinfachung kann hierbei eine Kugel oder weiter verallgemeinert ein Ellipsoid bzw. noch weiter verallgemeinert ein Doppel-Ellipsoid gemäß Fig. 3 verwendet werden.

Dabei können sich die Achslängen der Ellipsoiden adaptiv an die Geometrie des Schweißbads anpassen. Ein Abgleich kann hierbei dynamisch entweder auf Basis von Sensordaten wie beispielsweise von der Schweißkamera 30 (Geometrie des Schweißbad extrahieren), mithilfe von Prozessparametern wie beispielsweise der Prozessgeschwindigkeit (eine höhere Schweißgeschwindigkeit führt zu einem dünneren, längeren Ellipsoid) oder auf Basis einer zuvor durchgeführten thermischen Simulation (Temperaturverlauf Größe und Form des Schweißbads) stattfinden. Weiterhin können die Zeitstempel der enthaltenen Punkte 17 oder Simulationsergebnisse einbezogen werden, um einen Rückschluss auf das vorliegende Abkühlungsverhalten und somit die Größe des Schweißbads zu ziehen.

Basierend auf dem definierten Arbeitsbereich 18 werden Punkte 17 selektiert, die in der Prozessvergangenheit angelegt und mit Meta-Informationen wie beispielsweise einem Anomaliewahrscheinlichkeitswert, einem Wert für die Defektkritikalität oder einem Defekttyp angereichert sind. Dafür werden Datenstrukturen wie z.B. ein Octree verwendet, die Spatial Indexing und somit eine optimierte räumliche Suche nach den betroffenen Punkten erlauben. Jeder Punkt enthält dabei Informationen über lokale Prozessanomalien bzw. -defekte, sodass sich eine räumlich selektierte Punktewolke mit relevanten Informationen in der näheren Umgebung des aktuellen Arbeitspunkts 19 ergibt. Die erhaltenen Informationen werden nun verwendet, um einerseits die Anomalieerkennung zu verbessern und zum anderen Anpassungen am Prozess vorzunehmen.

Das Ergebnis der Anomaliebewertung durch die Modelle (inkl. zeitlichem Kontext) ist ein Anomaliewert, der eine Aussage über die Wahrscheinlichkeit für die Anomalie und damit des Defekts trifft. An dieser Stelle wird nun der räumliche Kontext auf zwei verschiedene Arten einbezogen: Wenn eine Anomalie erkannt wurde, kann diese über die räumlichen Kontextinformationen mit anderen Anomalien semantisch verbunden werden. Dadurch wird die räumliche Ausbreitung der Anomalie und damit des potenziellen Defekts sichtbar. Dabei bildet der zuvor genannte Doppel-Ellipsoid den relevanten Raum ab, in dem Defekte miteinander korreliert werden. Wenn z.B. in der ersten Lage eine Oxidation entsteht, wird in der Folge Lage ein Problem mit der Anbindung erzeugt. Diese beiden Defekte hängen miteinander zusammen, sodass nun die räumliche Ausbreitung des abnormalen Bereichs im Bauteil besser abgeschätzt werden kann.

Wenn sich beispielsweise in einem hochbelasteten Bereich eines Bauteils mehrere potenzielle Anomalien mit jeweils niedrigen Anomaliewert finden, die jede für sich nicht zu Ausschuss führen würde, die aber gemeinsam zu einem Versagen des Bauteils führen, kann darüber hinaus die Anomaliedichte bestimmt werden, um so abzuschätzen, ob eine kritische Anhäufung von Anomalien in einem Bauteilbereich erreicht ist. Dabei nimmt der Kontextraum für die Anomaliedichte nicht zwangsläufig nur den Raum des Schweißbads (flüssige Phase 20) ein, sondern kann abhängig vom Bauteil 2 auch größer sein (z.B. im Bereich von dünnen Stegen, die auf Grund von Anomalien sonst zu ungewollten Sollbruchstellen werden könnten). Damit kann in-situ eine Anomaliedichte im Bauteil 2 bestimmt werden. Überschreitet diese einen Grenzwert, kann der Prozess frühzeitig gestoppt werden und so Kosten wegen Ausschuss reduziert werden.

Mithilfe des zeitlichen und räumlichen Kontexts kann darüber hinaus eine Klassifizierung der Defekte vorgenommen werden. Dazu wird ein Neurales Netzwerk zur Klassifizierung verwendet, das als Eingangsgrößen vorverarbeitete Prozesswerte (bei prädiktiven Modellen Distanz zwischen vorhergesagtem und realem Wert oder bei Modellen zur Rekonstruktion der Rekonstruktionsfehler) annimmt. In einer letzten Schicht wird eine sigmoid-Function verwendet, um jedem Defekt einen Wahrscheinlichkeitswert zuzuweisen. Wenn beispielsweise bekannt ist, dass die vorherige Lage bereits deutlich abgekühlt ist, da der Unterschied der Zeitstempel hoch ist, kann mit höherer Wahrscheinlichkeit auf ein Adhäsionsdefekt geschlossen werden. Weiterhin liegt beispielsweise bei einer Oxidation in einer benachbarten Lage eine höhere Wahrscheinlichkeit für einen Defekt wegen Schmutzeinschlüssen vor.

### Bezugszeichenliste

- 2: Bauteil
- 4: Steuerung
- 6: Sensoren
- 8: Anomalie
- 10: digitaler Zwilling
- 12: Position Druckkopf
- 14: Druckkopf
- 16: Punktewolke
- 17, 17': Punkte
- 18: Arbeitsbereich
- 19: Arbeitspunkt
- 20: flüssige Phase
- 22: Ellipsoid
- 24: Roboterarm
- 26: Elektrode
- 28: Schweißdraht
- 30: Schweißkamera
- 32: Werktisch
- 34: Energieversorgung
- 36: Vorfahrweg Werktisch

## Patentansprüche

1. Verfahren zu additiven Fertigung eines Bauteils (2) umfassend folgende Schritte:
- Erstellen eines Maschinencodes und Übertragen des Maschinencodes an eine Steuerung (4)
- Starten des Fertigungsprozesses
- Überwachung des Prozesses mit Sensoren (6),
- Auswertung von Sensordaten zur Ermitteln einer Anomalie (8) im herzustellenden Bauteil sowie
- paralleler Aufbau eines digitalen Zwillings (10) des entstehenden Bauteils (2) während des Prozesses aus den Sensordaten umfassend Positionsdaten der Anomalie (8)
- Prädiktion über die Position (12) eines Druckkopfs (14) zu einer bestimmten Zeit mittels des Maschinencodes
- Analyse eines Arbeitsbereiches rund um diese Position in Hinblick auf vorhandene Anomalien mittels des digitalen Zwillings
- Anpassung der Prozessparameter bei Erreichen des Arbeitsbereiches zur Behebung der Anomalie.

2. Verfahren nach Anspruch 1, **dadurch gekennzeichnet, dass** zur Auswertung der Sensordaten ein Modell verwendet wird, durch das in einer dynamischen Zeitspanne Rückmeldedaten an die Steuerung (4) berechnet werden.

3. Verfahren nach Anspruch 2, **dadurch gekennzeichnet, dass** die dynamische Zeitspanne zwischen 0,05 s und 3 s, insbesondere zwischen 0,1 s und 1 s beträgt.

4. Verfahren nach einem der Ansprüche 1 bis 3, **dadurch gekennzeichnet, dass** jeder vom Druckkopf (14) angefahrenen Position (12) ein Zeitstempel zugeordnet wird.

5. Verfahren nach einem der Ansprüche 1 bis 4, **dadurch gekennzeichnet, dass** der digitale Zwilling (10) eine Punktwolke (16) umfasst und zu jedem Punkt ein Anomaliewert ermittelt wird zu dem ein Prozesszustand hinterlegt sind.

6. Verfahren nach Anspruch 5, **dadurch gekennzeichnet, dass** zur Ermittlung des Anomaliewerts Daten eines Arbeitsbereiches (18) aus benachbarten Punkten (17, 17') mit einbezogen werden.

7. Verfahren nach Anspruch 6, **dadurch gekennzeichnet, dass** der Arbeitsbereich (18) das räumliche Ausmaß einer zum Beobachtungszeitpunkt vorherrschenden flüssigen Phase (20) aufweist.

8. Verfahren nach einem der vorhergehenden Ansprüche, **dadurch gekennzeichnet, dass** die Punktewolke in einer räumlich strukturierten Datenstruktur in Form eines Octrees dargestellt wird.

9. Verfahren nach Anspruch 7, **dadurch gekennzeichnet, dass** der Arbeitsbereich (18) durch ein Doppel-Ellipsoid (22) dargestellt wird.

10. Verfahren nach Anspruch 8, **dadurch gekennzeichnet, dass** die Achsen des Ellipsoids an die Dimension des Schmelzbades angepasst werden.

11. Verfahren nach einem der vorhergehenden Ansprüche, **dadurch gekennzeichnet, dass** die Anpassung der Prozessparameter zur Behebung der Anomalie (8) einen höheren Wärmeeintrags umfasst.

12. Verfahren nach einem der vorhergehenden Ansprüche, **dadurch gekennzeichnet, dass** die Anpassung der Prozessparameter zur Behebung der Anomalie (8) eine niedrigere Druckkopfgeschwindigkeit umfasst.

13. Verfahren nach einem der vorhergehenden Ansprüche, **dadurch gekennzeichnet, dass** das additive Fertigungsverfahren ein Lichtbogendrahtauftragsschweißen ist.

14. Verfahren nach einem der Ansprüche 1 bis 11, **dadurch gekennzeichnet, dass** das additive Fertigungsverfahren ein Laser Metall Abscheideverfahren (LMD) ist.

15. Additive Fertigungsvorrichtung zur Durchführung eines Verfahrens nach einem der Ansprüche 1 bis 14 umfassend einen Roboterarm, eine Steuerung und einen Druckkopf sowie Sensoren zur Erfassung von Prozessparametern.
